# EUROPEAN PATENT SPECIFICATION

(11) **EP 3 663 154 B1**
(45) Date of publication and mention of the grant of the patent: **11.08.2021**
(21) Application number: 19213790.9
(22) Date of filing: 05.12.2019
(51) Int. Cl.: B60W 40/08, B62D 1/04, G01D 5/24

(54) **SAFETY DEVICE AGAINST THE REMOVAL OF ONE OR BOTH HANDS OF A DRIVER FROM THE STEERING WHEEL OF A MOTOR VEHICLE**
SICHERHEITSVORRICHTUNG ZUM ENTFERNEN VON EINER ODER BEIDEN HÄNDEN EINES FAHRERS VOM LENKRAD EINES KRAFTFAHRZEUGS
DISPOSITIF DE SÉCURITÉ EMPÊCHANT LE RETRAIT D'UNE OU DES DEUX MAINS D'UN CONDUCTEUR DU VOLANT DE DIRECTION D'UN VÉHICULE AUTOMOBILE

(30) Priority: 06.12.2018 IT 201800010859
(43) Date of publication of application: 10.06.2020
(73) Proprietor: Annoni, Michele, 20838 Renate MB (IT); Rigamonti, Matteo, 23835 Nibionno LC (IT)
(72) Inventor: RIGAMONTI, Matteo, 23835 NIBIONNO (IT)
(74) Representative: Mittler, Enrico

(56) References cited:
- WO-A1-03/036805
- US-A1- 2011 121 961
- US-A1- 2011 199 184
- US-A1- 2015 025 746
- US-A1- 2018 087 929

## Description

The present invention relates to a safety device against the removal of one or both hands of a driver from the steering wheel of a moving motor vehicle.

Many conditions have led to the need for a device to detect the presence of both of the driver's hands on the steering wheel of the vehicle to ensure that the driver cannot interact with other objects or devices not related to the driving of the vehicle, thereby jeopardizing the safe driving of the vehicle. Such conditions comprise the continuous increase in vehicle traffic, the presence of greater distractions at the wheel due to the new mobile communication devices which integrate advanced multimedia functions and the dissemination of devices for accessing various types of content, such as tablets, ebooks, etc., as well as the existence of many regulations which define constraints on the behavior to be followed while driving a vehicle, in particular:
- the correct use of the steering wheel, which must be held with both hands,
- the concentration to be maintained while driving, so that this is the only activity to be performed while at the wheel of a vehicle,
- the need to stop driving if the need to perform an activity which would compromise driving safety arises, such as for example communicating by means of a mobile device or other.

A safety device for motor vehicle steering wheel is already known from US patent 2018/0162224 A1 and provides that a detection ring is applied to the vehicle steering wheel comprising one or more sensors distributed along said ring and an alarm device connected to said one or more sensors to emit an alarm signal or to stop the advancement of the vehicle if an anomaly in the management of the steering wheel by the driver is detected. In particular, it describes the use of three sensors, one used to store and recognize the driver's fingerprint in order to report a possible theft of the vehicle, another to store and measure the driver's blood pressure in order to report a possible alteration of the driver's physical conditions and another to detect the pressure applied by the driver's hands on the steering wheel in order to report the possible lack of grip of the steering wheel by the driver. This patent does not make it clear that both of the driver's hands, not just one, must grip the steering wheel to avoid the intervention of the alarm device. Moreover, the recognition of the driver's identity is subject to the prior storage of the driver's fingerprint by means which are not described.

Another safety device for a vehicle steering wheel is known from Chinese utility model CN 201720400585.5 U and provides a pressure sensor in the form of an annular film mounted on the crown of the steering wheel, an on-board computer and an alarm that can be of the light and/or auditory type. The pressure sensor detects whether the driver is applying pressure with both hands or with one hand on different zones of the steering wheel rim and transmits respective pressure signals to the on-board computer, which in turn triggers the alarm signal when different pressures are detected in the two zones, meaning that the driver is not gripping the steering wheel with both hands, as is required. There is no provision to ensure that the detected pressures derive from the driver's hands and not from the hands of another person, or that they are not caused by the application of tape or other to the steering wheel rim.

US 2011/0121961 discloses a wheel watcher including the features of the preamble of claim 1.

It is the object of the present invention to create an improved safety device which allows detecting the presence, not necessarily the pressure, of both of the driver's hands on different appropriate zones of the steering wheel rim of a moving vehicle and also allows detecting with certainty that the contact with the steering wheel rim is determined by the driver's hands and not by the hands of another person or a thing.

According to the invention, such an object is achieved by a safety device for a moving motor vehicle, as defined in claim 1.

The safety device according to the invention, which may be integrated into the steering wheel of the vehicle or applicable onto it, can thus detect the simultaneous presence on the steering wheel of both of the driver's hands and that this presence is applied by the driver and not by another person or thing. The device is thus able to interpret whether the detection, on one or both parts of the steering wheel, is made by means of artifices or by hands other than the driver's, e.g. can detect whether the driver is receiving help from the occupant in the seat next to the driver's side, this person lending themselves to resting their hand on one of the sensing areas, in an attempt to deceive the safety device and thus allow the driver to have a free hand to be able to interact with any other object or device not related to the driving functions of the vehicle, leading to a behavior which could jeopardize the safety of driving the vehicle.

The features of the present invention will be more apparent from the following description of a possible embodiment thereof shown by way of non-limiting example in the accompanying drawings, in which:
figure 1 diagrammatically shows a front view of a steering wheel for a motor vehicle equipped with a safety device according to the present invention;
figure 2 shows a section view taken along the line II-II in figure 1 of a possible exemplary embodiment of the sensing areas of the safety device on the steering wheel rim;
figures 3a and 3b diagrammatically show, with views of the steering wheel and the driver from the left and right in relation to figure 1, the method used for detecting the presence of the driver's hands on sensing areas of the steering wheel;
figures 4, 5 and 6 show the basic functional diagram of the safety device according to the invention, respectively during a step of setting, of detecting the absence of a hand of the driver and of detecting of a hand different from the driver's;
figure 7 shows a flow chart showing the setting and subsequent operation of the safety device.

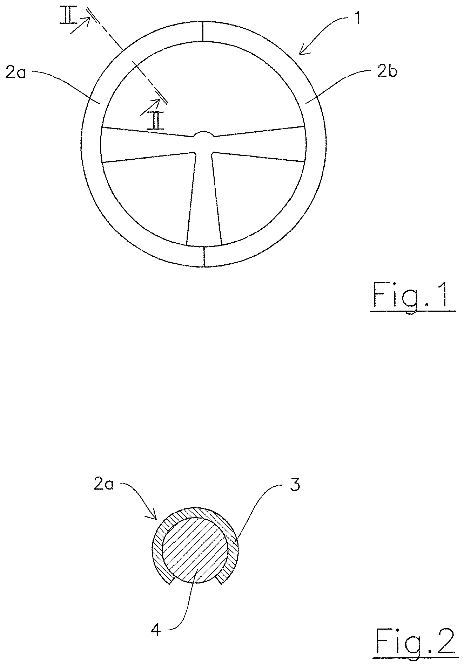

Figure 1 shows a motor vehicle steering wheel, indicated as a whole by reference numeral 1, on the crown of which two sensing areas 2a and 2b are applied, respectively on the left and right half of the steering wheel, which constitute the sensing parts of the safety device according to the invention. Said sensing areas are shown extending along the entire corresponding half of the steering wheel but may be more limited in size, in all cases such as to concern the parts that the vehicle driver will have to grip to drive the vehicle correctly.

By way of non-limiting example, the sensing area 2a is shown in figure 2 as formed by a sleeve 3 applied to the corresponding part of crown 4 of the steering wheel. A similar solution is adopted, again by way of non-limiting example, on the other sensing part 2b.

Different but technically equivalent solutions may be adopted without departing from the scope of the invention. In particular, the sensing parts may be formed as parts integrated into the steering wheel as soon as the steering wheel is manufactured.

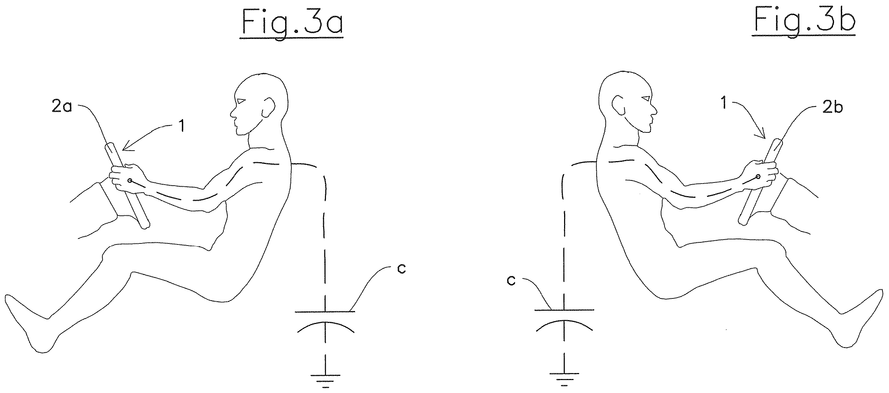

Figures 3a and 3b show that the tactile detection implemented by the sensing areas 2a and 2b is, at least preferably, of capacitive type, i.e. the electrical capacity C between the contact zones of the driver's hands and a ground point of the vehicle, passing through the driver's two arms, is detected.

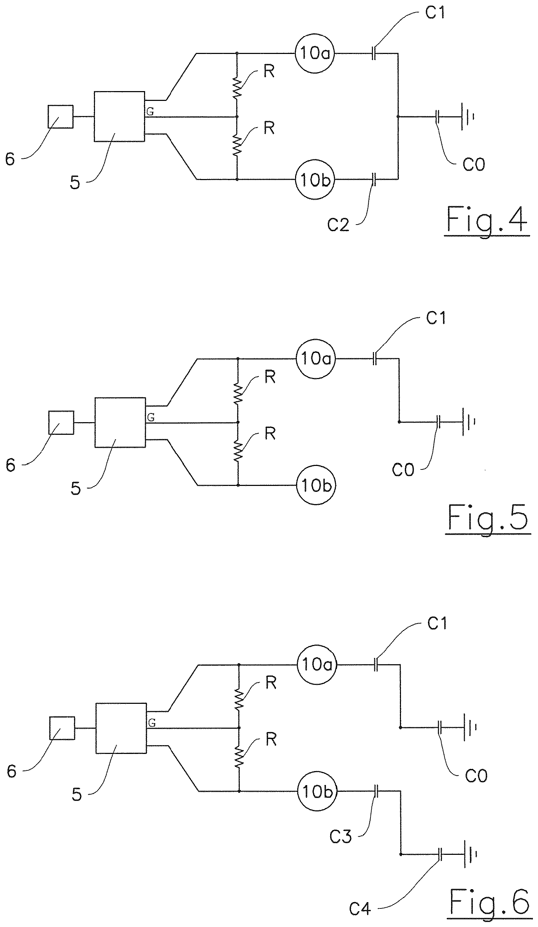

Figure 4 shows that the detections made by sensing areas 2a and 2b flow into the respective inputs of a processing unit 5, which also provides a ground pin G connected to the aforesaid inputs by means of resistors R of general setting of the device, which are mutually equal. In the event of an anomaly in the detections with respect to the desired condition (contact between both hands of the actual driver of the vehicle and the steering wheel of the vehicle itself), the processing unit 5 activates an alarm device 6, which may be an auditory and/or optical warning device or consisting of a vehicle braking actuator or any other device capable of restoring the safe driving condition.

Figure 4 refers to the functional diagram of the safety device during the initial step of setting, which takes place when the driver starts the vehicle and places both hands on sensing areas 2a and 2b of the steering wheel. The capacities C1 and C2 are those of the driver's two arms, while C0 is that of the driver's body from the arm attachment to the ground.

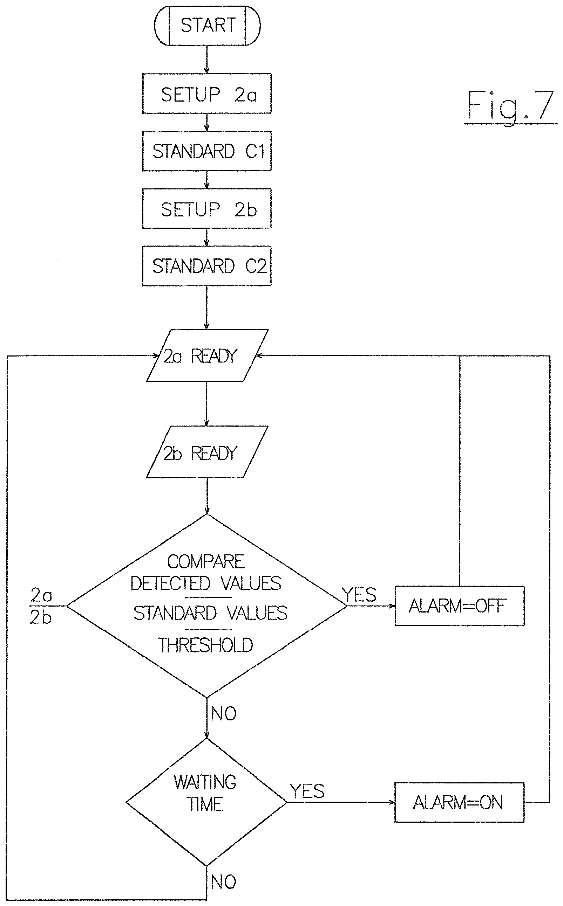

As shown in the flow chart in figure 7, when the vehicle is started and with both arms resting on the sensing areas of the steering wheel, the capacity values C1 and C2 are set that the processing unit 5 of the safety device recognizes as reliable and correct so as not to generate an alarm state. These values, which constitute the standard values of C1 and C2, are stored by the processing unit 5 together with the value of C0 and the two sensing areas 2a and 2b of the safety device are now ready for detection.

While driving the vehicle, the values measured by the two sensing areas 2a and 2b are continuously compared with the stored standard values.

If the driver keeps both hands on the right areas of the steering wheel defined by the aforesaid sensing areas, the processing unit 5 recognizes the correct driving condition, in which the measured capacity values C1 and C2 are the same and do not exceed a predetermined threshold, and alarm device 6 remains inactive.

If the driver removes one hand from the steering wheel, e.g. from the sensing area 10b, the situation shown in figure 5, i.e. the absence of capacity C2, will occur. The processing unit 5 thus detects capacitance values different from the standard ones stored in the step of setting and, after a very short waiting time has elapsed, activates the alarm device 6.

The same applies if the driver removes one hand from a sensing area, for e.g. 2b, and another driver replaces their own hand on the sensing area released by the driver. In such a case, as shown in figure 6, the capacitance detected by the sensing area 2b changes, becoming C3+C4 in total, and the processing unit 6 realizes that the hand resting on sensing area 10b is no longer the driver's because the detected capacitance value is different from the stored one. Once again, after a very short waiting time, the alarm device 6 is activated to signal the unsafe driving condition of the vehicle and/or to remove such a condition.

## Claims

1. A safety device against the removal of one or both hands of a driver from the steering wheel of a moving motor vehicle while driving the vehicle, comprising:
• two sensing areas (2a, 2b) associated with respective left and right halves of the rim of the steering wheel of the motor vehicle or with portions thereof intended for placing the hands of the driver of the motor vehicle for correctly driving it, each of said sensing areas (2a, 2b) being able to provide detection of contact of a respective hand of the driver,
• a processing unit (5) which is able to compare the hand contact detections provided by said sensing areas (2a, 2b) with stored data in order to verify the simultaneous contact of both of the driver's hands with said sensing areas (2a, 2b), and
• an alarm device (6) controlled by said processing unit (5) so as to be actuated in case of disagreement between said detections and said stored data **characterized in that**
• each hand contact detection is an electrical capacity value measured between the driver's hand and the mass of the vehicle through the driver's body;
• said stored data are human body capacity data indicative of the driver's body identity.

2. A safety device according to claim 1, **characterized in that** said sensing areas (2a, 2b) are applied to the rim of the steering wheel.

3. A safety device according to claim 1, **characterized in that** said sensing areas (2a, 2b) are integrated into the rim of the steering wheel.

4. A safety device according to claim 1, **characterized in that** said alarm device (6) is an acoustic signaling device.

5. A safety device according to claim 1, **characterized in that** said alarm device (6) is an optical signaling device.

6. A safety device according to claim 1, **characterized in that** said alarm device (6) is a brake actuator.

7. A safety device according to claim 1, **characterized in that** said processing unit (5) provides actuating the alarm device (6) if a disagreement threshold between said detections and the stored values is exceeded.

8. A safety device according to claim 1, **characterized in that** said processing unit (5) provides a waiting time to elapse before actuating the alarm device (6).

## Patentansprüche

1. Sicherheitsvorrichtung gegen das Entfernen von einer oder beiden Händen eines Fahrers vom Lenkrad eines sich bewegenden Kraftfahrzeugs während der Fahrt des Fahrzeugs, aufweisend:
• zwei Erfassungsbereiche (2a, 2b), die der jeweiligen linken und rechten Hälfte des Lenkradkranzes des Kraftfahrzeugs oder Bereichen davon zugeordnet sind, die zum Platzieren der Hände des Fahrers des Kraftfahrzeugs zum korrekten Führen desselben bestimmt sind, wobei jeder der Erfassungsbereiche (2a, 2b) in der Lage ist, den Kontakt einer jeweiligen Hand des Fahrers zu erfassen,
• eine Verarbeitungseinheit (5), die in der Lage ist, die von den Erfassungsbereichen (2a, 2b) bereitgestellten Handkontakt-Erfassungen mit gespeicherten Daten zu vergleichen, um den gleichzeitigen Kontakt beider Hände des Fahrers mit den Erfassungsbereichen (2a, 2b) zu verifizieren, und
• eine Alarmvorrichtung (6), die von der Verarbeitungseinheit (5) gesteuert wird, um im Falle einer Nichtübereinstimmung zwischen den Erfassungen und den gespeicherten Daten aktiviert zu werden, **dadurch gekennzeichnet, dass**
• es sich bei jeder Handkontakt-Erfassung um einen zwischen der Hand des Fahrers und der Masse des Fahrzeugs durch den Körper des Fahrers gemessenen elektrischen Kapazitätswert handelt;
• es sich bei den gespeicherten Daten um Kapazitätsdaten des menschlichen Körpers handelt, die die Identität des Körpers der Fahrers angeben.

2. Sicherheitsvorrichtung nach Anspruch 1,
**dadurch gekennzeichnet, dass** die Erfassungsbereiche (2a, 2b) an dem Lenkradkranz angebracht sind.

3. Sicherheitsvorrichtung nach Anspruch 1,
**dadurch gekennzeichnet, dass** die Erfassungsbereiche (2a, 2b) in den Lenkradkranz integriert sind.

4. Sicherheitsvorrichtung nach Anspruch 1,
**dadurch gekennzeichnet, dass** die Alarmvorrichtung (6) eine akustische Signalvorrichtung ist.

5. Sicherheitsvorrichtung nach Anspruch 1,
**dadurch gekennzeichnet, dass** die Alarmvorrichtung (6) eine optische Signalvorrichtung ist.

6. Sicherheitsvorrichtung nach Anspruch 1,
**dadurch gekennzeichnet, dass** die Alarmvorrichtung (6) ein Bremsaktuator ist.

7. Sicherheitsvorrichtung nach Anspruch 1,
**dadurch gekennzeichnet, dass** die Verarbeitungseinheit (5) eine Aktivierung der Alarmvorrichtung (6) vorsieht, wenn eine Abweichungsschwelle zwischen den Erfassungen und den gespeicherten Werten überschritten wird.

8. Sicherheitsvorrichtung nach Anspruch 1,
**dadurch gekennzeichnet, dass** die Verarbeitungseinheit (5) das Verstreichen einer Wartezeit vor der Aktivierung der Alarmvorrichtung (6) vorsieht.

## Revendications

1. Dispositif de sécurité contre le retrait d'une ou des deux mains d'un conducteur, du volant d'un véhicule à moteur mobile tout en conduisant le véhicule, comprenant :
• deux zones de détection (2a, 2b) associées aux moitiés gauche et droite de la jante du volant du véhicule à moteur ou à ses parties prévues pour placer les mains du conducteur du véhicule à moteur pour le conduire correctement, chacune desdites zones de détection (2a, 2b) pouvant fournir la détection de contact d'une main respective du conducteur,
• une unité de traitement (5) qui peut comparer les détections de contact de main fournies par lesdites zones de détection (2a, 2b) avec des données stockées afin de vérifier le contact simultané des deux mains du conducteur avec lesdites zones de détection (2a, 2b), et
• un dispositif d'alarme (6) commandé par ladite unité de traitement (5) afin d'être actionné en cas de désaccord entre lesdites détections et lesdites données stockées, **caractérisé en ce que** :
• chaque détection de contact de main est une valeur de capacité électrique mesurée entre la main du conducteur et la masse du véhicule en passant par le corps du conducteur ;
• lesdites données stockées sont des données de capacité de corps humain indiquant l'identité corporelle du conducteur.

2. Dispositif de sécurité selon la revendication 1, **caractérisé en ce que** lesdites zones de détection (2a, 2b) sont appliquées sur la jante du volant.

3. Dispositif de sécurité selon la revendication 1, **caractérisé en ce que** lesdites zones de détection (2a, 2b) sont intégrées dans la jante du volant.

4. Dispositif de sécurité selon la revendication 1, **caractérisé en ce que** ledit dispositif d'alarme (6) est un dispositif de signalisation acoustique.

5. Dispositif de sécurité selon la revendication 1, **caractérisé en ce que** ledit dispositif d'alarme (6) est un dispositif de signalisation optique.

6. Dispositif de sécurité selon la revendication 1, **caractérisé en ce que** ledit dispositif d'alarme (6) est un actionneur de frein.

7. Dispositif de sécurité selon la revendication 1, **caractérisé en ce que** ladite unité de traitement (5) fournit l'actionnement du dispositif d'alarme (6) si un seuil de désaccord entre lesdites détections et les valeurs stockées est dépassé.

8. Dispositif de sécurité selon la revendication 1, **caractérisé en ce que** ladite unité de traitement (5) fournit un temps d'attente qui doit s'écouler avant d'actionner le dispositif d'alarme (6).
